# EUROPÄISCHE PATENTSCHRIFT

(11) **EP 2 108 582 B1**
(45) Veröffentlichungstag und Bekanntmachung des Hinweises auf die Patenterteilung: **28.09.2016**
(21) Anmeldenummer: 09002968.7
(22) Anmeldetag: 03.03.2009
(51) Int. Cl.: B63G 8/08, B60L 11/00, B60L 11/06, B63H 21/17

(54) **Unterseeboot**
Submarine
Submersible

(30) Priorität: 11.04.2008 DE 102008018457
(43) Veröffentlichungstag der Anmeldung: 14.10.2009
(73) Patentinhaber: ThyssenKrupp Marine Systems GmbH, 24143 Kiel (DE)
(72) Erfinder: Buder, Ingo Dipl.-Ing., 23617 Stockelsdorf (DE)
(74) Vertreter: ThyssenKrupp Intellectual Property GmbH

(56) Entgegenhaltungen:
- DE-B3-102005 031 761
- US-A- 5 510 659

## Beschreibung

Die Erfindung betrifft ein Unterseeboot mit den im Oberbegriff des Anspruchs 1 angegebenen Merkmalen.

Bei Unterseebooten zählt es zum Stand der Technik, diese mit einem Gleichstrom-Versorgungsnetz auszustatten. Zur Speisung dieses Netzes sind wiederaufladbare Batterien, also Akkumulatoren vorgesehen, die bei nicht atomar betriebenen Unterseebooten üblicherweise mittels Dieselgeneratoren und ggf. mittels einer Brennstoffzellenanlage geladen werden. Um eine hohe Funktionssicherheit des Gleichstrom-Versorgungsnetzes sicherzustellen, wird bei diesen Versorgungsnetzen eine elektrisch leitende Verbindung mit dem größtenteils elektrisch leitend ausgebildeten Bootskörper als Massepotential verhindert. Siehe auch Dokument DE 102005031761.

In dem Gleichstrom-Versorgungsnetz ist es zur Kurzschlusssicherung erforderlich, allen Stromverbrauchern und Stromerzeugern, sowohl in der mit dem Minus- als auch in der mit dem Pluspol verbundenen Leitung jeweils einen Leistungsschalter vorzuschalten. Falls das Unterseeboot mehrere miteinander verbindbare Teilversorgungsnetze aufweist, sind auch in den mit dem Minus- und dem Pluspol verbundenen Leitungen, die diese Teilnetze miteinander verbinden, Leistungsschalter zur elektrischen Trennung vorzusehen. Die außerordentlich große Anzahl der erforderlichen Leistungsschalter macht den Aufbau der Versorgungsnetze sehr aufwändig.

Beim Schalten von hohen Gleichströmen entsteht üblicherweise ein Lichtbogen, der in speziell hierfür ausgestalteten Lichtbogenkammern zum Verlöschen gebracht wird. Die Schaltschränke für die Schalter mit den erforderlichen Löscheinrichtungen, Ausblaseräumen und Sicherheitsabständen nehmen einen erheblichen Raum ein, was in Unterseebooten wegen des darin zur Verfügung stehenden geringen Raumangebots außerordentlich nachteilig ist.

Vor diesem Hintergrund liegt der Erfindung die Aufgabe zugrunde, ein Unterseeboot mit einem Gleichstrom-Versorgungsnetz zu schaffen, dass gegenüber bislang bekannten Gleichstrom-Versorgungsnetzen ohne Sicherheitseinbußen einen vereinfachten Aufbau aufweist.

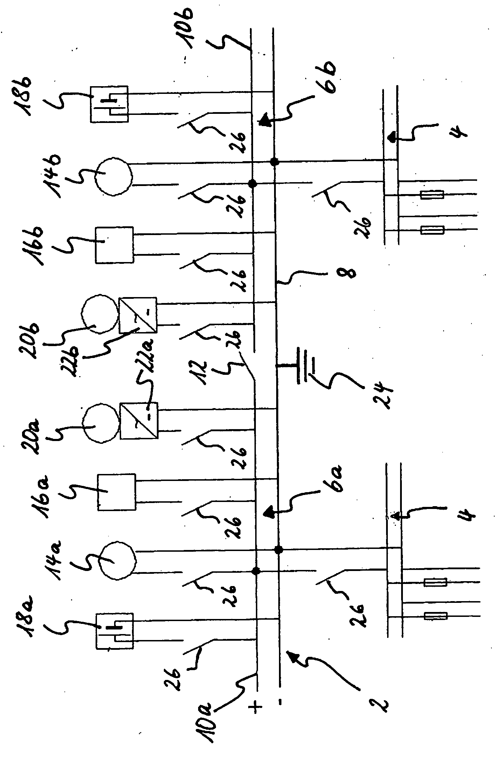

Gelöst wird diese Aufgabe durch ein Unterseeboot mit den in Anspruch 1 angegebenen Merkmalen. Vorteilhafte Weiterbildungen dieses Unterseeboots ergeben sich aus den Unteransprüchen, der nachfolgenden Beschreibung sowie der Zeichnung.

Der Erfindung liegt die Idee zugrunde, bei einem Unterseeboot, das zumindest ein Gleichstrom-Versorgungsnetz aufweist, einen Pol des Gleichstrom-Versorgungsnetzes elektrisch leitend mit zumindest einem elektrisch leitenden Teil des Bootskörpers zu verbinden. Bei dem erfindungsgemäßen Unterseeboot ist also eine dauerhafte Massung des Gleichstrom-Versorgungsnetzes an der elektrisch leitenden Stahlkonstruktion, z.B. dem Druckkörper des Unterseeboots vorgesehen, die über einen zentralen Anschluss oder über mehrere Anschlüsse erfolgen kann. Hierbei dient der elektrisch leitende Teil des Bootskörpers, mit dem der eine Pol, vorzugsweise der Minuspol des Gleichstrom-Versorgungsnetzes elektrisch leitend verbunden ist, allerdings nicht als Rückleiter. Das Gleichstrom-Versorgungsnetz weist einen Plus- und einen Minusleiter auf, die beide gegenüber dem elektrisch leitenden Teil des Bootskör-. pers elektrisch isoliert sind.

Der alleinige Anschluss eines Pols des Versorgungsnetzes an dem Bootskörper wirkt sich nicht negativ auf das Betriebsverhalten des Gleichstrom-Versorgungsnetzes aus. Allerdings würde ein gleichzeitiger Anschluss des anderen Pols an diesem elektrisch leitenden Teil des Bootskörpers in dem Gleichstrom-Versorgungsnetz zu einem Kurzschluss führen. Daher sind in dem Gleichstrom-Versorgungsnetz Leistungsschalter vorgesehen, mit denen das Versorgungsnetz in einem solchen Fall abgeschaltet werden kann. Mit Leistungsschaltern im Sinne der Erfindung werden zum besseren Verständnis die erforderlichen Schaltelemente zum Schalten eines Pols bezeichnet, wohlwissend, dass ein Leistungsschalter je nach Ausführung die Schaltelemente mehrerer Pole enthalten kann. Die erfindungsgemäße Ausgestaltung des Gleichstrom-Versorgungsnetzes hat aber den Vorteil, dass in dem Teil des Netzes, also dem Leiter, der an dem mit dem Bootskörper elektrisch leitend verbundenen Pol angeschlossen ist, keine Leistungsschalter erforderlich sind, was den Aufbau des Gleichstrom-Versorgungsnetzes erheblich vereinfacht und infolge der für die eingesparten Leistungsschalter nicht erforderlichen Schaltschränke in dem Unterseeboot zu einem deutlichen Raumgewinn führt.

Besonders unproblematisch ist der Einsatz dieses Gleichstrom-Versorgungsnetzes dann, wenn es sich bei dem Unterseeboot, wie es bevorzugt vorgesehen ist, um ein militärisches Unterseeboot mit einem einteilig ausgebildeten Druckkörperinnenraum handelt. Der Druckkörperinnenraum kann also bei diesem militärischen Unterseeboot nicht mittels Schotts in mehrere druckdicht verschließbare Abteilungen aufgeteilt werden. Bei einem solchen Unterseeboot kann feindlicher Beschuss und eine daraus resultierende größere Beschädigung der Druckkörperwandung zwar grundsätzlich zu einem Kurzschluss in dem Versorgungsnetz führen, diesem Kurzschluss ist aber in der Regel keine Bedeutung beizumessen, da eine großflächige Beschädigung der Druckkörperwandung bei einem Unterseeboot mit einem einteiligen Druckkörperinnenraum typischerweise zum Totalverlust des Bootes führt.

Ein weiterer Vorteil des Anschlusses eines Pols des Gleichstrom-Versorgungsnetzes an dem elektrisch leitenden Teil des Bootskörpers ist darin zu sehen, dass das an diesem Pol anliegende Potential dem Massepotential des Bootskörpers entspricht. Im Gegensatz zu den bislang üblichen Gleichstrom-Versorgungsnetzen, bei denen die aktiven Leiter in Abhängigkeit von der Netzableitkapazität und dem Isolationswiderstand ein unterschiedliches und undefiniertes Potential gegen Masse aufweisen, was in diesen Netzen ungünstigstenfalls zu transienten Spannungsspitzen führen kann, liegen also bei dem Gleichstrom-Versorgungsnetz des erfindungsgemäßen Unterseeboots eindeutig definierte Potentialverhältnisse vor.

Bevorzugt ist das Gleichstrom-Versorgungsnetz das Fahrnetz zur Energieversorgung eines Propellermotörs. D.h., das Gleichstrom-Versorgungsnetz wird vorzugsweise von dem Netz gebildet, das den Elektromotor, der den Propeller des Bootes antreibt, und bei dem es sich zweckmäßigerweise um einen über einen Stromrichter gespeisten Synchronmotor handelt, mit elektrischer Energie versorgt. Neben dem Propellermötor als Energieverbraucher sind an dem Fahrnetz zumindest ein Dieselgeneratorensatz sowie ggf. eine Brennstoffzellenanlage als Energieerzeuger und eine Batterie als Energiespeicher angeschlossen.

Wie bereits erwähnt, kann das Gleichstrom-Versorgungsnetz des erfindungsgemäßen Unterseeboots gegenüber bislang üblichen Versorgungsnetzen eine deutlich geringere Anzahl an Leistungsschaltern zur Kurzschlusssicherung aufweisen. So ist vorteilhaft vorgesehen, dass den an dem Gleichstrom-Versorgungsnetz angeschlossenen Energieverbrauchern, Energiespeichern und Energieerzeugern jeweils nur ein Leistungsschalter vorgeschaltet ist. Bei den bislang bekannten Gleichstrom-Versorgungsnetzen ist es hingegen erforderlich, alle an dem Versorgungsnetz angeschlossene Energieverbraucher und Energieerzeuger allpolig, d.h. mit zwei Leistungsschaltern abzusichern. Demgegenüber ermöglicht die Erfindung also vorteilhaft eine Halbierung der benötigen Leistungsschalter, da Leistungsschalter den an dem Gleichstrom-Versorgungsnetz angeschlossenen Stromverbrauchern und Stromerzeugern vorteilhafterweise lediglich an dem nicht mit dem elektrisch leitenden Teil des Bootsköpers verbundenen Pol vorgeschaltet werden müssen.

Zur Erhöhung der Funktionssicherheit wird das Gleichstrom-Versorgungsnetz bevorzugt von zwei voneinander getrennten und bei Bedarf miteinander elektrisch verbindbaren Teilversorgungsnetzen gebildet, wobei in einer elektrischen Verbindung der Teilversorgungsnetze nur ein Leistungsschalter angeordnet ist. Jedem dieser Teilversorgungsnetze ist zweckmäßigerweise eine eigene Energieversorgung zugeordnet. So können an den beiden Teilversorgungsnetzen jeweils ein Dieselgeneratorensatz, eine Batterie und eine Brennstoffzellenanlage angeschlossen sein. Um sicherzustellen, dass auch bei Ausfall eines Teilversorgungsnetzes der Antrieb des Schiffes gewährleistet ist, ist der Propellermotor bei dieser Ausgestaltung des Gleichstrom-Versorgungsnetzes bevorzugt elektrisch in Teilmotore aufgeteilt, wobei ein Teilmotor jeweils einem Teilversorgungsnetz zugeordnet ist. Mit dem in der elektrischen Verbindung der Teilversorgungsnetze angeordneten Leistungsschalter kann ein Teilversorgungsnetz dann, wenn es in dem anderen Teilversorgungsnetz zu einem Kurzschluss gekommen ist, von diesem Teilversorgungsnetz getrennt werden. In diesem Fall kann zumindest der an dem intakten Teilversorgungsnetz angeschlossene Teilmotor mit elektrischer Energie versorgt werden. Der in der elektrischen Verbindung der Teilversorgungsnetzes angeordnete Leistungsschalter ist zweckmäßigerweise auch in einer die Teilversorgungsnetze elektrisch leitend verbindenden Leitung, die nicht mit dem elektrisch leitenden Teil des Bootsköpers verbundenen Pol verbunden ist, angeordnet.

An dem das Gleichstrom-Versorgungsnetz des erfindungsgemäßen Unterseeboots bildenden Fahrnetz kann vorteilhaft zumindest ein Bordnetz angeschlossen sein, wobei auch hier an dem nicht mit dem elektrisch leitenden Teil des Bootskörpers verbundenen Pol ein Leistungsschalter vorgesehen ist. Dementsprechend sind bei dieser Ausgestaltung nicht alle mit elektrischer Energie betriebenen Einrichtungen des Unterseeboots direkt an dem Fahrnetz angeschlossen, sondern es ist zumindest ein von dem Fahrnetz abzweigendes Unternetz in Form des Bordnetzes vorgesehen, das diese Einrichtungen mit Energie versorgt: Der Leistungsschalter schützt die Bordnetzverteilung, während Sicherungen, einen Verbraucherkurzschluss abschalten.

Nachfolgend ist die Erfindung anhand eines in der Zeichnung dargestellten Ausführungsbeispiels näher erläutert. In der Zeichnungsfigur ist eine stark vereinfachte Schaltskizze eines Gleichstrom-Versorgungsnetzes des erfindungsgemäßen Unterseeboots dargestellt.

Das dargestellte Gleichstrom-Versorgungsnetz wird von einem Fahrnetz 2 des Unterseebootes gebildet. Das Fahrnetz 2 dient hauptsächlich zur Energieversorgung des Propellermotors des Unterseeboots, versorgt α-ber über ein an dem Fahrnetz 2 angeschlossenes Bordnetz 4, im Wesentlichen alle elektrisch betriebenen Einrichtungen des Unterseeboots.

Das Fahrnetz 2 ist zweiteilig ausgebildet und weist zwei miteinander verbindbare Teilversorgungsnetze 6a und 6b auf. Die Teilversorgungsnetze 6a und 6b weisen einen gemeinsamen Minusleiter 8 und zwei getrennte Plusleiter 10a und 10b auf, wobei die Plusleiter 10a und 10b über einen dazwischen angeordneten Leistungsschalter 12 miteinander verbindbar oder voneinander trennbar sind.

Die Zweiteilung des Fahrnetzes 2 dient zur Steigerung der Betriebssicherheit des Unterseeboots. An jedem der das Fahrnetz bildenden Teilversorgungsnetze 6a und 6b sind eigene Stromerzeuger in Form von Dieselgeneratorensätzen 14a, 14b und Brennstoffzellenanlagen 16a, 16b sowie jeweils zumindest eine wiederaufladbare Batterie 18a, 18b als Energiespeicher angeschlossen. Des Weiteren ist auch ein das Unterseeboot antreibender Propellermotor elektrisch in zwei Teilmotore 20α und 20b geteilt, wobei jeweils einer der Teilmotore 20a, 20b an einem der Teilversorgungsnetze 6a, 6b angeschlossen ist. Die Teilmotore 20a, 20b sind als Synchronmotoren ausgebildet. Daher ist in beiden Teilmotoren 20a und 20b jeweils ein Stromrichter 22a, 22b in Form eines Wechselrichters vorgeschaltet.

Der gemeinsame Minusleiter 8 der beiden Teilversorgungsnetze 6a, 6b und damit der Minuspol des Fahrnetzes 2 des Unterseeboots ist über einen zentralen Massungspunkt 24 mit einem elektrisch leitenden Teil des Bootskörpers verbunden. Insofern liegen bei dem Gleichstrom-Versorgungsnetz des erfindungsgemäßen Unterseeboots eindeutige Potentialverhältnisse vor, die es ermöglichen, die an dem Fahrnetz 2 angeschlossenen Einrichtungen und das an dem Fahrnetz 2 angeschlossene Bordnetz 4 lediglich einpolig gegen einen möglichen Kurzschluss zu sichern. D.h., dass jeder, der an dem Fahrnetz 2 angeschlossenen Einrichtungen und dem Bordnetz 4 jeweils an dem nicht mit dem elektrisch leitenden Teil des Bootskörpers verbundenen Pol, in diesem Fall der Pluspol des Gleichstrom-Versorgungsnetzes, ein Leistungsschalter 26 vorgeschaltet ist.

Die Kurzschlusssicherung des Gleichstrom-Versorgungsnetzes des erfindungsgemäßen Unterseeboots erfolgt wie folgt:
Kommt es beispielsweise in dem Teilversorgungsnetz 6a des Fahrnetzes 2 zu einem Kurzschluss, werden je nach Kurzschlussört die dem Dieselgeneratorsatz 14a, der Brennstoffzellenanlage 16a, der Batterie 18a oder dem Teilmotor 20a zugeordneten Leistungsschalter 26 ausgelöst. In jedem Fall ist nur das Teilversorgungsnetz 6a betroffen, das nach Abtrennen des Fehlerorts, sofern sich dieser nicht auf einer den Minusleiter 8 und den Plusleiter 10 tragenden Sammelschiene selbst befindet, durch Schließen des Schalters 12 zwischen den Plusleitern 10a und 10b zumindest eingeschränkt weiter versorgt werden kann. Demzufolge bricht die Energieversorgung des erfindungsgemäßen Unterseeboots bei einem Kurzschluss in dem Gleichstrom-Versorgungsnetz nicht vollständig zusammen, da sie in diesem Fall von dem nicht von dem Kurzschluss betroffenen Teilversorguhgsnetz 6b zumindest teilweise übernommen werden kann.

### Bezugszeichenliste

- 2: - Fahrnetz
- 4: - Bordnetz
- 6a, 6b: - Teilversorgungsnetz
- 8: - Minusleiter
- 10a, 10b: - Plusleiter
- 12: - Leistungsschalter
- 14a, 14b: - Dieselgeneratorensatz
- 16a, 16b: - Brennstoffzellenanlage
- 18a, 18b: - Batterie
- 20a, 20b: - Teilmotor
- 22a, 22b: - Stromrichter
- 24: - Massungspunkt
- 26: - Leistungsschalter

## Patentansprüche

1. Unterseeboot mit zumindest einem Gleichstrom-Versorgungsnetz, **dadurch gekennzeichnet, dass** ein Pol des Gleichstrom-Versorgungsnetzes dauerhaft elektrisch leitende mit zumindest einem elektrisch leitenden Teil des Bootskörpers verbunden ist.

2. Unterseeboot nach Anspruch 1, **dadurch gekennzeichnet, dass** das Gleichstrom-Versorgungsnetz das Fahrnetz (2) zur Energieversorgung eines Propellermotors ist.

3. Unterseeboot nach einem der vorangehenden Ansprüche, **dadurch gekennzeichnet, dass** den an dem GleichstromVersorgungsnetz angeschlossenen Energieverbrauchern, Energiespeichern und Energieerzeugern jeweils nur ein Leistungsschalter (26) vorgeschaltet ist.

4. Unterseeboot nach Anspruch 3, **dadurch gekennzeichnet, dass** die Leistungsschalter (26) den an dem Gleichstrom-Versorgungsnetz angeschlossenen Energieverbrauchern, Energiespeichern und Energieerzeugern an dem nicht mit dem elektrisch leitenden Teil des Bootskörpers verbundenen Pol vorgeschaltet sind.

5. Unterseeboot nach einem der vorangehenden Ansprüche, **dadurch gekennzeichnet, dass** das Gleichstrom-Versorgungsnetz von zwei voneinander getrennten und bei Bedarf miteinander elektrisch verbindbaren Teilversorgungsnetzen (6a, 6b) gebildet wird, wobei in einer elektrischen Verbindung der Teilversorgungsnetze nur ein Leistungsschalter (12) angeordnet ist.

6. Unterseeboot nach Anspruch 5, **dadurch gekennzeichnet, dass** der Leistungsschalter (12) in einer die Teilversorgungsnetze elektrisch leitend verbindenden Leitung, die nicht mit dem mit dem elektrisch leitenden Teil des Bootskörpers verbundenen Pol verbunden ist, angeordnet ist.

7. Unterseeboot nach einem der Ansprüche 2 bis 6, **dadurch gekennzeichnet, dass** an dem Fahrnetz (2) zumindest ein Bordnetz (4) angeschlossen ist, wobei an dem nicht mit dem elektrisch leitenden Teil des Bootskörpers verbundenen Pol ein Leistungsschalter (26) vorgesehen ist.

8. Unterseeboot nach einem der vorangehenden Ansprüche, **dadurch gekennzeichnet, dass** das Unterseeboot ein militärisches Unterseeboot mit einem vorzugsweise einteiligen Druckkörperinnenraum ist.

## Claims

1. Submarine having at least one direct current power supply system, **characterized in that** a pole of the direct current power supply system is connected in a continuously electrically conductive fashion to at least one electrically conductive part of the body of the vessel.

2. Submarine according to Claim 1, **characterized in that** the direct current power supply system is the propulsion electrical system (2) for supplying energy to a propeller motor.

3. Submarine according to one of the preceding claims, **characterized in that** only one power switch (26) is connected upstream of each of the energy consumers, energy stores and energy generators which are connected to a direct current power supply system.

4. Submarine according to Claim 3, **characterized in that** at their pole which is not connected to the electrically conductive part of the body of the vessel, the power switches (26) are connected upstream of the energy consumers, energy stores and energy generators which are connected to the direct current power supply system.

5. Submarine according to one of the preceding claims, **characterized in that** the direct current power supply system is formed by two partial supply systems (6a, 6b) which are disconnected from one another and can be connected to one another electrically when necessary, wherein just one power switch (12) is arranged in an electrical connection of the partial supply systems.

6. Submarine according to Claim 5, **characterized in that** the power switch (12) is arranged in a line which connects the partial supply systems in an electrically conductive fashion and is not connected to the pole which is connected to the electrically conductive part of the body of the vessel.

7. Submarine according to one of Claims 2 to 6, **characterized in that** at least one on-board power system (4) is connected to the propulsion electrical system (2), wherein a power switch (26) is provided on the pole which is not connected to the electrically conductive part of the body of the vessel.

8. Submarine according to one of the preceding claims, **characterized in that** the submarine is a military submarine with a preferably single-part pressure vessel interior.

## Revendications

1. Sous-marin avec au moins un réseau d'alimentation en courant continu, **caractérisé en ce qu'**un pôle du réseau d'alimentation en courant continu est relié durablement et de façon électriquement conductrice à au moins une partie électriquement conductrice de la coque.

2. Sous-marin selon la revendication 1, **caractérisé en ce que** le réseau d'alimentation en courant continu est le réseau de propulsion (2) pour l'alimentation en énergie d'un moteur à hélice.

3. Sous-marin selon l'une des revendications précédentes, **caractérisé en ce qu'**un seul disjoncteur (26) est respectivement connecté en amont des consommateurs d'énergie, accumulateurs d'énergie et générateurs d'énergie raccordés au réseau d'alimentation en courant continu.

4. Sous-marin selon la revendication 3, **caractérisé en ce que** les disjoncteurs (26) sont connectés en amont des consommateurs d'énergie, accumulateurs d'énergie et générateurs d'énergie raccordés au réseau d'alimentation en courant continu, par le pôle non-relié à la partie électriquement conductrice de la coque.

5. Sous-marin selon l'une des revendications précédentes, **caractérisé en ce que** le réseau d'alimentation en courant continu est constitué de deux réseaux d'alimentation partiels (6a, 6b) séparés l'un de l'autre et aptes à être électriquement reliés entre eux en cas de besoin, un seul disjoncteur (12) étant installé dans une liaison électrique des réseaux d'alimentation partiels.

6. Sous-marin selon la revendication 5, **caractérisé en ce que** le disjoncteur (12) est installé dans une ligne reliant les réseaux d'alimentation partiels de façon électriquement conductrice, laquelle n'est pas reliée au pôle relié à la partie électriquement conductrice de la coque.

7. Sous-marin selon l'une des revendications 2 à 6, **caractérisé en ce qu'**au moins un réseau de bord (4) est raccordé au réseau de propulsion (2), un disjoncteur (26) étant prévu au niveau du pôle non-relié à la partie électriquement conductrice de la coque.

8. Sous-marin selon 1"une des revendications précédentes, **caractérisé en ce que** le sous-marin est un sous-marin militaire avec un espace intérieur de coque sous pression, de préférence monobloc.
